# EUROPEAN PATENT APPLICATION

(11) **EP 1 422 037 A1**
(43) Date of publication of application: **26.05.2004**
(21) Application number: 03026220.8
(22) Date of filing: 14.11.2003
(51) Int. Cl.: B29C 41/04, B29C 33/38, B29C 71/02, B29C 37/00

(54) **Method for producing rotationally molded parts from semi-crystalline materials**

(30) Priority: 20.11.2002 US 302598
(71) Applicant: DEERE & COMPANY, Moline, Illinois 61265-8098 (US)
(72) Inventor: Shuttleworth, Adam Joe, Denver IA 50622 (US); Boyce, Dean Arden, Waterloo IA 50702 (US)
(74) Representative: Magin, Ludwig Bernhard

(57) **Abstract**

A method is provided for producing dimensionally stable rotationally molded parts from semi-crystalline materials. A test mold is constructed having dimensions closely approximating the desired dimensions of the final part. A test part is then molded in the test mold using conventional rotational molding techniques. After the test part has partially cooled, it is removed from the mold, allowed to cool to ambient temperature, measured and annealed in an oven. During annealing, the part is heated to the crystallization temperature, midway between the glass transition temperature and the crystalline melting temperature. After annealing, the part is allowed to cool to ambient temperature and measured again. The post annealing dimensions are then compared with the dimensions determined before annealing to determine the amount of shrinkage. A production mold is then constructed to take into account the amount of shrinkage calculated. Production parts may then be molded in the production mold and annealed at the crystallization temperature to attain parts having a small dimensional tolerance and high tensile strength.

## Description

The present invention relates generally to processes for molding, casting, or shaping of nonmetallic materials to produce articles. More particularly, the present invention relates to processes in which the formed article is subjected to a treatment after working, molding or shaping thereof. Specifically, the present invention relates to processes wherein the worked, shaped or molded article is subjected to a positively applied heating step for the purpose of annealing the article.

Synthetic semi-crystalline materials such as polyethylenes (PE) and polyamides (PA), are frequently used for molding articles such as vehicle body parts. Such articles are often produced by rotational molding. In the rotational molding process a large mold cavity receives a charge of a powdered plastic resin after which the mold is rotated and heated, causing the plastic powder to melt and flow over the interior surface of the mold cavity. After the melted resin has coated the entire surface, the mold is cooled and the part is removed and allowed to cool to ambient temperature outside the mold.

Rotationally molded synthetic resin materials such as PE and PA can have a shrinkage factor in excess of 1.5%. In typical molding processes, the synthetic materials do not always reach an equilibrium shrinkage in the mold. The molded article is removed from the mold while it is only partially shrunk. As a result, shrinkage occurs after molding so that the article is changed in dimension and thus there exists a range of dimensional variation among products.

Accordingly, the spacing provided between adjacent vehicle body parts, or between the part and the vehicle structure, may be undesirably widened. Consequently, appearance qualities are frequently less than desirable and problems occur in the fit and mounting of parts. Occasionally parts produced by rotational molding will not shrink enough. As a result such parts are frequently rejected due to fit-up, assembly and/or aesthetic problems. In some instances shrinkage will reduce the size of rotational moldings to a size that is so small that they do not meet a given minimum size prior to mounting upon the vehicle or perhaps are so changed in their dimensions that they become impossible to mount upon the vehicle. As such rotationally molded parts have a relatively large tolerance range. Thus, rotational molding has traditionally been limited to parts where a large tolerance range is acceptable.

One solution to part shrinkage is to mold parts oversize and to allow the parts to shrink down to the proper size. However, due to inconsistencies in the amount of shrinkage, often rotationally molded parts will still be either too big or too small after cooling. Such inconsistencies arise as a result of process, material, temperature and operator variation

Accordingly, there is a clear need in the art for a means to dimensionally stabilize rotationally molded parts made from semi-crystalline materials to achieve a more consistent fit and appearance among products. The annealing process disclosed below allows rotationally molded parts to be utilized in applications where tight tolerances would have previously not allowed a rotationally molded part to be utilized. Thus, increasing the market for rotationally molded parts.

In view of the foregoing, it is an object of the invention to provide a process for dimensionally stabilizing rotationally molded parts made from semi-crystalline materials.

Another object of the invention is the provision of a process for producing rotationally molded parts which can be used in applications requiring small dimensional tolerances.

A further object of the invention is to provide a process for producing dimensionally stable rotationally molded parts which reduces the number of reject parts and thereby conserves time, money and resources.

An additional object of the invention is the provision of a process for producing rotationally molded parts having a higher tensile strength, modulus and level of robustness than previously possible using known techniques.

The foregoing and other objects of the invention together with the advantages thereof over the known art which will become apparent from the detailed specification which follows are attained by a method for rotationally molding parts from semi-crystalline materials comprising the steps of: constructing a test mold to produce a part having dimensions closely approximating the desired final size; rotationally molding a test part in the test mold using semi-crystalline resin; measuring the baseline dimensions of the test part after the part has been removed from the mold and has cooled to ambient temperature; annealing the part in an oven to the crystallization temperature; measuring the post-annealing dimensions of the part after the part has cooled to ambient temperature; comparing the baseline dimensions with the post annealing dimensions to determine the amount of shrinkage; constructing a production mold targeting the amount of shrinkage as the amount of oversize between a molded part and a final part; molding production parts in the production mold; and, annealing the production parts at the crystallization temperature to shrink the production parts to final size.

Other objects of the invention are attained by a method for rotationally molding parts from semi-crystalline materials comprising the steps of: constructing a test mold to produce a part having dimensions closely approximating the desired final size; charging the test mold with a powdered semi-crystalline resin; heating the test mold to melt the powdered semi-crystalline resin; rotating the test mold to allow the melted resin to coat the surfaces of the mold; measuring the baseline dimensions of the test part after the part has been removed from the mold and has cooled to ambient temperature; annealing the part in an oven to the crystallization temperature; measuring the post-annealing dimensions of the part after the part has cooled to ambient temperature; comparing the baseline dimensions with the post annealing dimensions to determine the amount of shrinkage; constructing a production mold targeting the amount of shrinkage as the amount of oversize between a molded part and a final part; charging the production mold with a powdered semi-crystalline resin; heating the production mold to melt the powdered semi-crystalline resin; rotating the production mold to allow the melted resin to coat the surfaces of the mold; cooling the production mold while still rotating; removing a molded production part from the production mold; annealing the production part at the crystallization temperature to shrink the production part to final size; and, molding additional production parts in the production mold and annealing the additional production parts to shrink the parts to final size.

In general, a method is provided for producing dimensionally stable rotationally molded parts from semi-crystalline materials. A test mold is constructed having dimensions closely approximating the desired dimensions of the final part. A test part is then molded in the test mold using conventional rotational molding techniques. After the test part has partially cooled, it is removed from the mold, allowed to cool to ambient temperature, measured and annealed in an oven. During annealing, the part is heated to the crystallization temperature, midway between the glass transition temperature and the crystalline melting temperature. After annealing, the part is allowed to cool to ambient temperature and measured again. The post annealing dimensions are then compared with the dimensions determined before annealing to determine the amount of shrinkage. A production mold is then constructed to take into account the amount of shrinkage calculated. Production parts may then be molded in the production mold and annealed at the crystallization temperature to attain parts having a small dimensional tolerance and high tensile strength.

To acquaint persons skilled in the art most closely related to the present invention, one preferred embodiment of the invention that illustrates the best mode now contemplated for putting the invention into practice is described herein by and with reference to, the annexed drawings that form a part of the specification. The exemplary embodiment is described in detail without attempting to show all of the various forms and modifications in which the invention might be embodied. As such, the embodiment shown and described herein is illustrative, and as will become apparent to those skilled in the art, can be modified in numerous ways within the spirit and scope of the invention--the invention being measured by the appended claims and not by the details of the specification.

For a complete understanding of the objects, techniques, and structure of the invention reference should be made to the following detailed description and accompanying drawings, wherein:

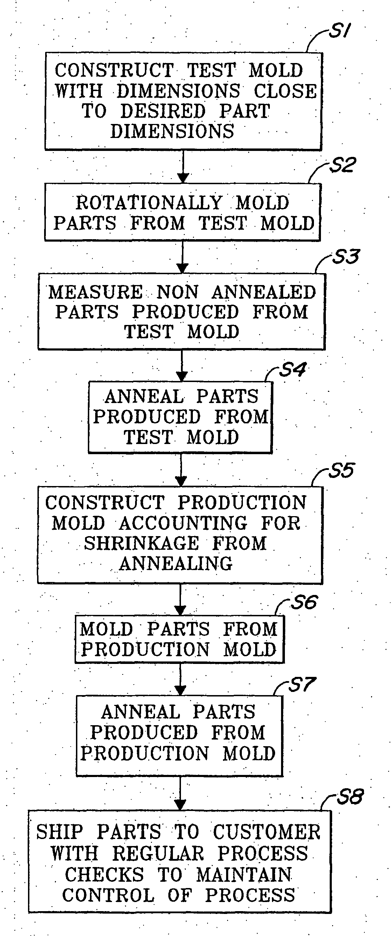

- Fig. 1: is a flow chart showing the steps of the method of the invention.

When referring to the drawing figure it will be noted that the individual steps of the method are labeled with a numbering convention comprising a letter S along with a step number. Accordingly, step one is designated S1. This convention shall be employed throughout the specification.

When it is first determined to manufacture a rotationally molded part from semi-crystalline materials, a test mold is constructed having dimensions approximating those of the final dimension of the part (S1).

A test part may then be rotationally molded (S2) in the test mold using known rotational molding techniques. As such the mold is charged with resin, heated and rotated to allow the resin to melt and coat the inner surfaces of the mold. Heat is then removed from the mold and the part is allowed to cool partially while the mold is still rotating. The part is then removed from the mold, allowed to cool to ambient temperature, and measured (S3) to determine its baseline dimensions.

After the baseline dimensions have been determined the part is annealed (S4) in an oven to a temperature between the glass transition temperature (T_{g}) and the crystalline melting temperature (Tₘ). The ideal temperature for annealing is midway between T_{g} and Tₘ and is referred to herein as the crystallization temperature (T_{c}). The T_{g} and Tₘ values are material specific and can be provided by the material manufacturer or supplier through the results of Differential Scanning Calorimetry (DSC), Pressure-Volume-Temperature (PVT) or other appropriate tests. Once T_{c} has been established for a given material, that temperature will be used for the annealing process. At T_{c} the amorphous areas of the part will crystallize and the existing crystals within the part become larger. As a result, the density of the part increases and the free volume within the part is reduced, causing shrinkage.

While T_{c} is material specific the time required for annealing is part specific and will require some experimentation on the part of the operator to determine the ideal time. The time the part is at T_{c} depends on the final part dimensions desired. To a point, the longer the part is at T_{c} the more crystals will form and the more the final part will shrink. There is however, a limit to how long crystal formation will continue to occur. Once full crystallization occurs no more crystals will form. If the part is annealed to full crystallization to achieve the desired final part dimensions, the cooling rate after the annealing process is not critical. When the part is not fully crystallized, the cooling rate will affect the amount of crystals in the part; which will therefore affect the final size of the part.

From a practical standpoint it has been determined that optimal crystal formation can be attained by slowly heating the part from an ambient temperature to a point where the entire part has reached T_{c} and then allowing the part to slowly cool to ambient temperature again. During the annealing and cooling process the part must be placed in an appropriate fixture to allow the part to move freely, while not allowing the part to distort. It is important that the part is supported but not restrained during annealing and cooling of the part to ambient temperature so as to allow shrinkage from crystal formation. It should also be noted that in the event that the previous annealing processes did not attain full crystallization, the annealing process can be repeated multiple times to attain full crystallization of the part. However, after the part is at full crystallization, further annealing processes will not result in any major change in the amount of crystallization and shrinkage.

By measuring the dimensions of the test part after annealing at T_{c} and comparing the post annealing dimensions with the baseline dimensions, a production mold can be constructed (S5) targeting the amount of shrinkage determined in the test. Thus production parts can then be molded (S6) and annealed (S7) to consistently attain tighter tolerances and thus achieve the desired fit and appearance of the final product. After annealing the parts are dimensionally stable and have a higher tensile strength and modulus resulting in a more robust product. Annealed parts can then be shipped to customers (S8). The process can be monitored regularly to ensure quality fit and appearance.

It has been determined that use of the above described process consistently results in parts having a dimensional tolerance in the range of +/-.25%, significantly less than the +/- 1.5% previously attained with known techniques.

Thus it can be seen that the objects of the invention have been satisfied by the structure presented above. While in accordance with the patent statutes, only the best mode and preferred embodiment of the invention has been presented and described in detail, it is not intended to be exhaustive or to limit the invention to the precise form disclosed. Obvious modifications or variations are possible in light of the above teachings. The embodiment was chosen and described to provide the best illustration of the principles of the invention and its practical application to thereby enable one of ordinary skill in the art to utilize the invention in various embodiments and with various modifications as are suited to the particular use contemplated. All such modifications and variations are within the scope of the invention as determined by the appended claims when interpreted in accordance with the breadth to which they are fairly and legally entitled.

## Claims

1. A method for rotationally molding parts from semi-crystalline materials comprising the steps of constructing a test mold to produce a part having dimensions closely approximating the desired final size; rotationally molding a test part in the test mold using semi-crystalline resin; measuring the baseline dimensions of the test part after the part has been removed from the mold and has cooled to ambient temperature; annealing the part in an oven to the crystallization temperature; measuring the post-annealing dimensions of the part after the part has cooled to ambient temperature; comparing the baseline dimensions with the post annealing dimensions to determine the amount of shrinkage; constructing a production mold targeting the amount of shrinkage as the amount of oversize between a molded part and a final part molding production parts in the production mold; and, annealing the production parts at the crystallization temperature to shrink the production parts to final size.

2. A method for rotationally molding parts from semi-crystalline materials comprising the steps of constructing a test mold to produce a part having dimensions closely approximating the desired final size; charging the test mold with a powdered semi-crystalline resin; heating the test mold to melt the powdered semi-crystalline resin; rotating the test mold to allow the melted resin to coat the surfaces of the mold; measuring the baseline dimensions of the test part after the part has been removed from the mold and has cooled to ambient temperature; annealing the part in an oven to the crystallization temperature; measuring the post-annealing dimensions of the part after the part has cooled to ambient temperature; comparing the baseline dimensions with the post annealing dimensions to determine the amount of shrinkage; constructing a production mold targeting the amount of shrinkage as the amount of oversize between a molded part and a final part; charging the production mold with a powdered semi-crystalline resin; heating the production mold to melt the powdered semi-crystalline resin; rotating the production mold to allow the melted resin to coat the surfaces of the mold; cooling the production mold while still rotating; removing a molded production part from the production mold;annealing the production part at the crystallization temperature to shrink the production part to final size; and, molding additional production parts in the production mold and annealing the additional production parts to shrink the parts to final size.

3. A method for rotationally molding parts from semi-crystalline materials as described in claim 1 or 2 wherein the semi-crystalline material is a polyethylene.

4. A method for rotationally molding parts from semi-crystalline materials as described in claim 1 or 2 wherein the semi-crystalline material is a polyamide.

5. A method for rotationally molding parts from semi-crystalline materials as described in one or several of the claims 1 to 4 wherein the crystallization temperature is midway between a glass transition temperature and a crystalline melting temperature.

6. A method for rotationally molding parts from semi-crystalline materials as described in one or several of the claim 1 to 5 wherein the part is placed on a fixture which will support the part while allowing for movement of the part without distortion during the annealing step.

7. A method for rotationally molding parts from semi-crystalline materials as described in claim 4 wherein the part is annealed until the material has reached full crystallization.
